**Europäisches Patentamt**

**European Patent Office**

**Office européen des brevets**

(19)

(11) Veröffentlichungsnummer: **0 027 201**
**B1**

(12)

# EUROPÄISCHE PATENTSCHRIFT

(45) Veröffentlichungstag der Patentschrift:
28.09.83

(51) Int. Cl.³: **B 60 B 7/00**

(21) Anmeldenummer: **80105884.3**

(22) Anmeldetag: **29.09.80**

(54) Schraubkapseln für Radachsen.

(30) Priorität: **12.10.79 DE 7928973 U**

(43) Veröffentlichungstag der Anmeldung:
**22.04.81 Patentblatt 81/16**

(45) Bekanntmachung des Hinweises auf die Patenterteilung:
**28.09.83 Patentblatt 83/39**

(84) Benannte Vertragsstaaten:
**DE FR GB IT**

(56) Entgegenhaltungen:
**FR-A-591 007**
**FR-A-647 069**
**FR-A-658 538**
**GB-A-181 045**
**GB-A-526 576**

(73) Patentinhaber: **Bergische Achsenfabrik Fr. Kotz & Söhne, Am Ohlerhammer, D-5276 Wiehl 1 (DE)**

(72) Erfinder: **Steiner, Helmut, Freiherr vom Stein-Strasse 1, D-5276 Wiehl (DE)**
Erfinder: **Holländer, Karl Erich, Im Krahnöchei 9, D-5276 Wiehl (DE)**

(74) Vertreter: **Stenger, Alex, Dipl.-Ing. et al, Patentanwälte Dipl.-Ing. A. Stenger Dipl.-Ing. W. Watzke Dipl.-Ing. H.J. Ring Kaiser-Friedrich-Ring 70, D-4000 Düsseldorf 11 (DE)**

BUNDESDRUCKEREI BERLIN

## Schraubkapsel für Radachsen

Die Erfindung betrifft eine Schraubkapsel für Radachsen zum Verschließen der Radnabe mit einem zylindrischen Teil, an dem ein Außen- oder Innengewinde angeordnet ist, und einem vorstehenden, reduzierten Teil mit Schlüsselflächen zum Ansetzen eines Schlüssels und einer geschlossenen Stirnwand.

Schraubkapseln für Radachsen sind in den unterschiedlichsten Ausführungsformen und Formgestaltungen bekannt. Sie dienen einerseits dazu, die äußeren Enden der Radnaben zu verschließen, um die Lager zu schützen, andererseits aber auch dazu, an ihrer Stirnwand das Firmenzeichen des Herstellers der Radachse oder des Fahrzeugs aufzunehmen. Die bekannten Radachsen sind an ihrem vorstehenden, reduzierten Teil entweder mit Schlüsselflächen, beispielsweise als Achtkant, ausgebildet oder am äußeren Umfang mit Schlagnocken versehen, so daß entweder ein Schlüssel oder ein Schlagwerkzeug zum Befestigen bzw. Lösen benutzt werden kann. Der Nachteil dieser bekannten Ausführungsformen besteht darin, daß ein Befestigen oder Lösen schwierig ist, wenn im Bedarfsfall der passende Schlüssel oder ein geeignetes Schlagwerkzeug nicht vorhanden, beispielsweise verlorengegangen ist. Es besteht deshalb ein Bedürfnis für eine Schraubkapsel, die sowohl mit einem passenden Schlüssel als auch mit einem Schlagwerkzeug befestigt und gelöst werden kann.

Davon ausgehend liegt der Erfindung die Aufgabe zugrunde, eine Schraubkapsel für Radachsen zu schaffen, die sowohl mit Schlüsselflächen als auch mit Schlagflächen versehen ist.

Diese Aufgabe wird für eine Schraubkapsel der eingangs beschriebenen Gattung dadurch gelöst, daß der reduzierte Teil nur zwei sich gegenüberliegende und parallel zueinander verlaufende Schlüsselflächen besitzt, deren achsparallele Ränder innerhalb des zylindrischen Teils enden und daß die Ränder durch nach außen gekrümmte Schlagflächen miteinander verbunden sind, die mit den Schlüsselflächen einen stumpfen Winkel bilden, der gleich oder kleiner als 125° ist.

Bei einer praktischen Ausführungsform können die Schlagflächen im Bereich ihrer Scheitelpunkte kreisförmig gekrümmt sein und einen geringeren Abstand vom Mittelpunkt haben als die Schlüsselflächen. Auf diese Weise ist es möglich, den von den Schlagflächen und den Schlüsselflächen eingeschlossenen Winkel erheblich kleiner zu machen als es beispielsweise im Falle eines Achtkantes zwischen den Schlüsselflächen möglich ist, so daß mit einem geeigneten Schlagwerkzeug in Richtung einer Sekante verlaufende Schläge ausgeübt werden können, ohne daß das Schlagwerkzeug wirkungslos abrutscht.

Um die Stabilität der Schraubkapsel zu erhöhen, hat es sich als zweckmäßig erwiesen, in der Stirnwand im Abstand von den Schlüssel- und Schlagflächen eine kreisflächige Einprägung anzuordnen, in die dann wiederum das Firmenzeichen erhaben eingeprägt werden kann.

Eine erfindungsgemäß ausgebildete Schraubkapsel hat den Vorteil, daß sie sowohl mit einem Schlüssel als auch mit einem geeigneten Schlagwerkzeug befestigt oder gelöst werden kann, wenn beispielsweise der passende Schlüssel im Bedarfsfall gerade nicht zur Hand oder verlorengegangen ist. Dieser Werkzeugmangel kann insbesondere bei Anhängern auftreten, die mit verschiedenen Zugfahrzeugen bewegt werden, wenn die Achsen des Zugfahrzeugs und des Anhängers nicht vom gleichen Hersteller stammen, was sehr häufig vorkommt.

Ein Ausführungsbeispiel der Erfindung ist in der nachfolgenden Beschreibung und der Zeichnung dargestellt. In der Zeichnung zeigt

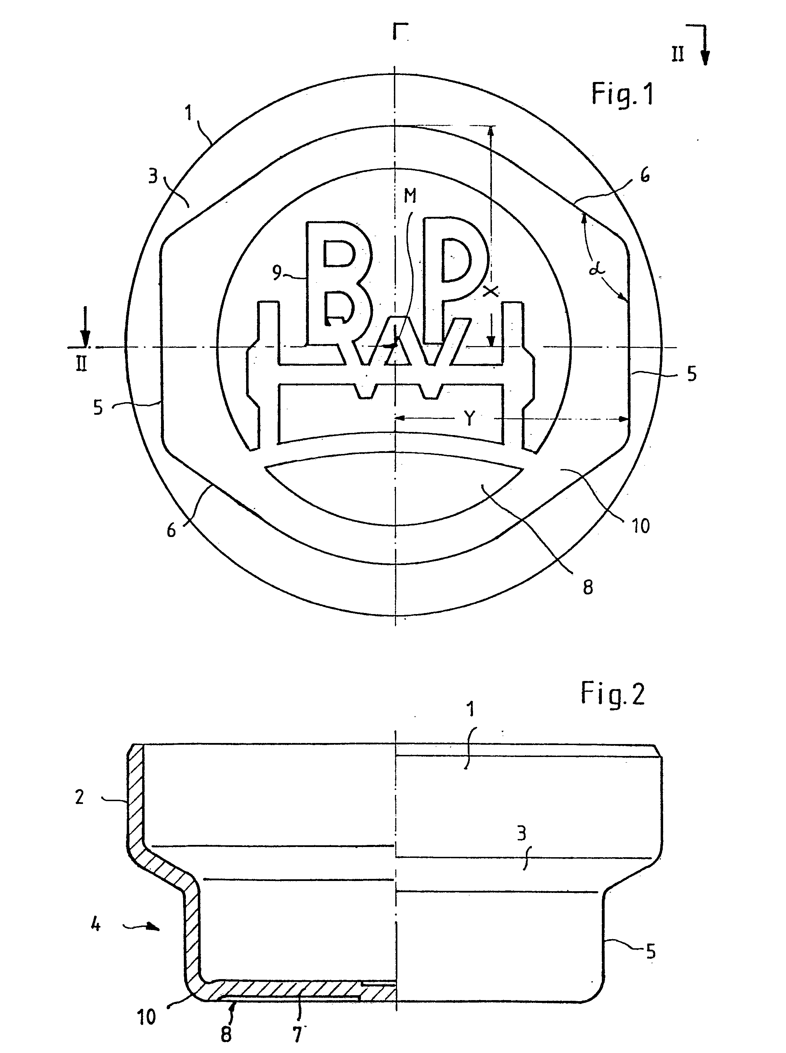

Fig. 1 eine Schraubkapsel im Grundriß,

Fig. 2 dieselbe Schraubkapsel entlang der Linie II-II in Fig. 1, zur Hälfte geschnitten und zur anderen Hälfte in Draufsicht.

Die dargestellte Schraubkapsel ist topfförmig ausgebildet und besteht aus einem zylindrischen Teil 1 mit einem Außengewinde 2, einem konischen Übergangsstück 3 und einem reduzierten Teil 4 mit Schlüsselflächen 5 und Schlagflächen 6. An der Vorderseite ist die Schraubkapsel mit einer Stirnwand 7 verschlossen.

Der Abstand x der Scheitelpunkte der nach außen gekrümmten Schlagflächen 6 vom Mittelpunkt M ist etwas kleiner als der Abstand y der Schlüsselflächen 5 vom Mittelpunkt M. Dadurch kann der von den Schlüsselflächen 5 und den Schlagflächen 6 eingeschlossene Winkel $\alpha$ gleich oder kleiner als cirka 125° sein, so daß an die Schlüsselfläche 5 eine Schlagfläche 6 angrenzt, die fast in Richtung einer Sekante mit einem Schlagwerkzeug bearbeitet werden kann, ohne daß dieses abrutscht.

Die Stirnwand 7 ist mit einer sickenartigen Einprägung 8 versehen, um insbesondere in der Randzone, wo das Schlagwerkzeug angesetzt wird, die Stabilität zu verbessern. Innerhalb der sickenartigen Einprägung 8 ist in die Stirnwand 7 ein Firmenzeichen 9 erhaben eingeprägt. Das Firmenzeichen 9 liegt geschützt innerhalb eines von der sickenartigen Einprägung 8 sowie den Schlüssel- und Schlagflächen 5, 6 begrenzten Wulstes 10.

Alle in der Beschreibung erwähnten und in der Zeichnung dargestellten neuen Merkmale sind erfindungswesentlich, auch soweit sie in den zugehörigen Ansprüchen nicht ausdrücklich beansprucht worden sind.

**Patentansprüche**

1. Schraubkapsel für Radachsen zum Verschließen der Radnabe mit einem zylindrischen Teil (1), an dem ein Außen- oder Innengewinde angeordnet ist, und einem vorstehenden, reduzierten Teil (4) mit Schlüsselflächen (5) zum Ansetzen eines Schlüssels und einer geschlossenen Stirnwand (7), dadurch gekennzeichnet, daß der reduzierte Teil (4) nur zwei sich gegenüberliegende und parallel zueinander verlaufende Schlüsselflächen (5) besitzt, deren achsparallele Ränder innerhalb des zylindrischen Teils (1) enden, und daß die Ränder durch nach außen gekrümmte Schlagflächen (6) miteinander verbunden sind, die mit den Schlüsselflächen (5) einen stumpfen Winkel ($\alpha$) bilden, der gleich oder kleiner als 125° ist.

2. Schraubkapsel nach Anspruch 1, dadurch gekennzeichnet, daß die Schlagflächen (6) im Bereich ihrer Scheitelpunkte kreisförmig gekrümmt sind und einen geringeren Abstand (x) vom Mittelpunkt (M) haben als die Schlüsselflächen (5).

3. Schraubkapsel nach den Ansprüchen 1 und 2, dadurch gekennzeichnet, daß in der Stirnwand (7) im Abstand von den Schlüssel- und Schlagflächen (5, 6) eine kreisflächige Einprägung (8) angeordnet ist.

**Claims**

1. Screw cap for wheel axles for closing the wheel hub, with a cylindrical part (1) on which an external or internal thread is located, and with a projecting reduced part (4) with key faces (5) for applying a spanner, and with a closed end wall (7), characterised in that the reduced part (4) has only two key faces (5) which are located opposite one another and extend parallel to one another and the axis-parallel edges of which end within the cylindrical part (1), and in that the edges are connected to one another by impact surfaces (6) which are curved outwards and which form with the key faces (5) an obtuse angle ($\alpha$) equal to or less than 125°.

2. Screw cap according to Claim 1, characterised in that the impact surfaces (6) are curved circularly in the region of their vertices and are at a shorter distance (x) from the centre point (M) than the key faces (5).

3. Screw cap according to Claims 1 and 2, characterised in that an engraving (8) of circular area is located in the end wall (7) at a distance from the key faces and impact surfaces (5, 6).

**Revendications**

1. Flasque fileté d'essieux pour l'obturation du moyeu de roue comportant une partie cylindrique (1) filetée intérieurement ou extérieurement, une partie en saillie (4) de section réduite présentant des surfaces de clé (5) et une paroi frontale fermée (7), caractérisé en ce que la partie de section réduite (4) ne présente que deux surfaces de clé (5) parallèles se faisant face, dont les arêtes parallèles à l'axe se fondent dans la partie cylindrique (1) et en ce que ces arêtes sont reliées entre elles par des surfaces de frappe (6) convexes extérieurement, et formant avec les surfaces de clé (5) un angle obtu inférieur ou égal à 125°.

2. Flasque selon la revendication 1, caractérisé en ce que les surfaces de frappe (6) ont un rayon de courbure constant au voisinage de leur sommet et se trouvent à une distance fixe du centre (M) plus faible que ne le sont les surfaces de clé (5).

3. Flasque selon les revendications 1 et 2, caractérisé en ce qu'un renfoncement circulaire s'inscrivant entre les surfaces de clé et les surfaces de frappe (5 et 6) est réalisé dans la paroi frontale fermée (7).

Fig.1

Fig.2